# EUROPÄISCHE PATENTSCHRIFT

(11) **EP 1 666 282 B1**
(45) Veröffentlichungstag und Bekanntmachung des Hinweises auf die Patenterteilung: **05.11.2008**
(21) Anmeldenummer: 05025854.0
(22) Anmeldetag: 26.11.2005
(51) Int. Cl.: B60G 17/02, B60G 15/06, B60G 11/14

(54) **Radaufhänger mit Federverstellung für Kraftfahrzeuge**
Suspension system with an adjustable spring
Système de suspension avec un ressort ajustable

(30) Priorität: 06.12.2004 DE 102004058698
(43) Veröffentlichungstag der Anmeldung: 07.06.2006
(73) Patentinhaber: Muhr und Bender KG, 57439 Attendorn (DE)
(72) Erfinder: Carlitz, Andreas, Dipl.-Ing., 52224 Stolberg (DE); Neubrand, Jörg, Dr.-Ing., 57258 Freudenberg (DE); Hengstenberg, Rolf, Dr.-Ing., 57439 Attendorn (DE)
(74) Vertreter: Neumann, Ernst Dieter

(56) Entgegenhaltungen:
- US-A- 5 947 459
- US-A1- 2002 175 488

## Beschreibung

Die Erfindung betrifft eine Radaufhängung umfassend einen Fahrzeugaufbau, ein mit diesem über eine Lenkeranordnung beweglich angelenktes Rad mit einem Radträger und zumindest einer Schraubendruckfeder, die sich am Fahrzeugaufbau einerseits und am Radträger oder der Lenkeranordnung andererseits abstützt, wobei die auf den Aufstandspunkt P des Rades bezogene Federsteifigkeit der Fahrzeugaufbauabstützung gesteuert veränderbar ist, in dem die räumliche Lage Kraftwirkungslinie der Schraubendruckfeder gegenüber der Drehachse der Lenkeranordnung und infolgedessen das Übersetzungsverhältnis von Kraftwirkungslinie und Aufstandspunkt P des Rades verändert wird.

Aus der DE 25 38 103 A1 sind Radaufhängungen bekannt, bei denen symmetrische Schraubendruckfedern gegenüber den Federtellern, mit denen sie sich am Fahrzeugaufbau und an der Lenkeranordnung abstützen, exzentrisch versetzt sind. Die Schraubendruckfedern sind hierbei konventionelle Federn, bei denen die Federmittellinie mit der Kraftwirkungslinie der Feder übereinstimmt. Durch motorisches Verdrehen der Federteller findet eine Veränderung der Federsteifigkeit der Fahrzeugaufbauabstützung gegenüber dem Aufstandspunkt des Rades statt. Die Federsteifigkeit der Feder selbst ist hiervon unberührt. Die Verstellung wirkt sich auf die wirksamen Hebelarme aus, so daß die Federung des Fahrzeugs "weicher" oder "härter" eingestellt werden kann.

Aus der DE 37 07 085 A1 sind Radaufhängungen bekannt, bei denen die Abstützpunkte einer Schraubendruckfeder gegenüber dem Fahrzeugaufbau und/oder gegenüber dem Radträger bzw. der Lenkeranordnung derart translatorisch verschoben werden kann, d.h., insbesondere in einer Richtung senkrecht zur Mittelachse der entsprechenden Federteller, daß auch hierbei die auf den Aufstandspunkt des Rades bezogene Federsteifigkeit der Fahrzeugaufbauabstützung gegenüber dem Rad gesteuert veränderbar ist. Auch hierbei bleibt die Federsteifigkeit in der Feder selber unverändert. Die erwünschte Wirkung beruht auf der Veränderung der wirksamen Hebelarme.

Aus der DE 37 43 450 C2 und aus der DE 101 25 503 C1 sind Radaufhängungen bekannt, in denen Schraubendruckfedern verwendet werden, deren Kraftwirkungslinie mit der Federmittellinie einen Winkel bilden. Die Radaufhängungen sind hierbei ausschließlich solche nach dem McPherson-Prinzip, wobei durch die gewählte Winkelstellung zwischen der Kraftwirkungslinie und der Federmittellinie, die von der Achse des entsprechenden Federbeins nur geringfügig abweichen kann, erreicht wird, daß Querkräfte auf die Aufhängung des Federbeins reduziert werden. Die fest vorgegebene Abweichung der Kraftwirkungslinie im Verhältnis zur Federmittellinie im eingebauten Zustand wird dadurch herbeigeführt, daß die Schraubendruckfedern im entspannten Zustand in radialer Ansicht einen etwa S-förmigen Verlauf haben bzw. in radialer Ansicht einen S-förmigen Verlauf in einer ersten Ansicht und einen C-förmigen Verlauf in einer dazu senkrechten zweiten Ansicht bzw. einen S-förmigen Verlauf in einer ersten Ansicht und einen ebenfalls s-förmigen Verlauf in einer dazu senkrechten zweiten Ansicht haben.

Aus der US 5 947 459 A ist eine Radaufhängung der eingangs genannten Art bekannt, bei der eine Schraubendruckfederanordnung verwendet wird, deren durch die Geometrie der Radaufhängung vorgegebene Kraftwirkungslinie von der geometrischen Federmittellinie abweicht. Hierbei sind am oberen Federteller der Schraubendruckfederanordnung Kugellagermittel vorgesehen, deren Mittelachse von der Lenkachse der Radaufhängung abweicht. Zusätzlich sind Verlagerungsmittel für den oberen Federteller vorgesehen, die ein Verschwenken desselben um eine etwa parallel zur Mittelachse der Kugellagermittel liegende Schwenkachse bewirken, die außerhalb des Teilkreises der Kugellagermittel und außerhalb der oberen Windung der Schraubendruckfeder liegt. Aufgrund der Kugellagermittel findet bei Verlagerung des oberen Federtellers keine Verdrehung der Schraubendruckfeder statt.

Wie in der DE 101 25 503 C1 im einzelnen beschrieben, sind die hiermit genannten Beispiele nicht die einzigen technischen Möglichkeiten, eine vorgegebene Abweichung zwischen Federmittellinie und Kraftwirkungslinie im eingebauten Zustand in einer Radaufhängung zu verwirklichen. Auf andere Möglichkeiten ist verwiesen.

Wie in der DE 101 25 503 C1 ebenfalls bereits ausgeführt, gibt es keine normgemäße Definition für den Begriff der Federmittellinie von Schraubendruckfedern. Die dort beschriebene Art, Federmittellinien von Schraubendruckfedern zu ermitteln, wird nachstehend wiederholt.

Ein erstes Verfahren zur Ermittlung der Federmittellinie von Schraubendruckfedern ist dadurch gekennzeichnet, daß zunächst der Hüllmantel der Schraubendruckfeder konstruiert wird und daß dann aus dem konstruierten Hüllmantel die Hüllmantelmittellinie ermittelt wird, die mit der Federmittellinie gleichgesetzt wird. Dieses Verfahren ist allenfalls eingeschränkt anwendbar; es versagt insbesondere dort, wo Federwindungen mit sich änderndem Windungsdurchmesser vorliegen. Ein weiteres Verfahren zur Bestimmung der Federmittellinie von Schraubendruckfedern ist dadurch gekennzeichnet, daß aus dem arithmetischen Mittel der Windungspunkte jeweils Krümmungs-Mittelpunkte der Federwindung bestimmt werden, und daß die Verbindung der so bestimmten Krümmungs-Mittelpunkte der Federwindungen die Federmittellinie darstellen. Schließlich kann die Federmittellinie von Schraubendruckfedern auch dadurch bestimmt werden, daß die Projektionen der einzelnen Federwindungen in einer Ebene betrachtet werden, daß als Mittelpunkt jeder Federwindung der Mittelpunkt eines Kreises angenommen wird, der an die Federwindung angenähert ist und daß die so gewonnenen Mittelpunkte der Federwindungen miteinander verbunden werden.

Wenn auf die Federmittellinien von Schraubendruckfedern Bezug genommen wird, dann kommt es darauf an, welche Bedeutung die Federmittellinien für die Federkraftwirkungslinien von Schraubendruckfedern haben. Hat eine Schraubendruckfeder eine gerade Federmittellinie, so fällt die Federkraftwirkungslinie, die natürlich stets eine Gerade ist, mit der Federmittellinie zusammen. Bei einer Schraubendruckfeder, deren Federmittellinie im entspannten Zustand einen etwa C-förmigen Verlauf hat, ist im eingebauten Zustand die Federkraftwirkungslinie gegenüber der im eingebauten Zustand gerade verlaufenden Federmittellinie verschoben (DE 37 43 450 C2, Figur 5). Demgegenüber gilt für eine Schraubendruckfeder, deren Federmittellinie im unbelasteten Zustand einen etwa S-förmigen Verlauf hat, daß im eingebauten Zustand die Federkraftwirkungslinie zur im eingebauten Zustand gerade verlaufenden Federmittellinie unter einem spitzen Winkel verläuft (DE 37 43 450 C2, Figur 6).

Die Kraftwirkungslinie der Schraubendruckfeder bestimmt sich durch die Richtung der Kräfte und Gegenkräfte des Fahrzeugaufbaus einerseits und des Radträgers bzw. der Lenkeranordnung andererseits gegenüber den Federtellern, auf denen sich die Schraubendruckfeder abstützt. Die Anlage zwischen den Enden der Schraubendruckfeder und den Federtellern ist allgemein eine Mehrpunktanlage, beispielsweise eine Dreipunktanlage. Es können jedoch auch linienförmige Anlagen auftreten.

Ausgehend von dem eingangs genannten Stand der Technik liegt der vorliegenden Erfindung die Aufgabe zugrunde, Radaufhängungen zu schaffen, die verbesserte Veränderungsmöglichkeiten der auf den Aufstandpunkt des Rades bezogenen Federsteifigkeit der Fahrzeugaufbauabstützung ermöglichen. Solche Anpassungsmöglichkeiten können als einfache, gegebenenfalls auch manuelle Anpassungsmöglichkeiten für verschiedene Belastungszustände des Fahrzeugs ausgelegt sein. Im Vordergrund stehen jedoch mit einfachen technischen Mitteln darstellbare vollaktive Fahrwerke, mit denen die Radaufhängungen, insbesondere auch unabhängig voneinander, an unterschiedliche Fahrzustände angepaßt werden können.

Die Lösung der vorstehenden Aufgabe besteht in einer Radaufhängung umfassend einen Fahrzeugaufbau, ein mit diesem über Lenkeranordnungen beweglich angelenktes Rad mit einem Radträger und zumindest eine Schraubendruckfeder, die sich am Fahrzeugaufbau einerseits und am Radträger oder der Lenkeranordnung andererseits abstützt, wobei die auf den Aufstandspunkt P des Rades bezogene Federsteifigkeit der Fahrzeugaufbauabstützung gesteuert veränderbar ist, wobei eine Schraubendruckfederanordnung verwendet wird, deren Kraftwirkungslinie von der geometrischen Federmittellinie abweicht, und wobei Verdrehmittel für die räumliche Verstellung der Kraftwirkungslinie gegenüber der geometrischen Federmittellinie vorgesehen sind, und die sich dadurch auszeichnet, daß die Schraubendruckfeder um ihre geometrische Federmittellinie L verdrehbar ist.

Mit der erfindungsgemäßen Radaufhängung in ihrer Grundform wird die Schraubendruckfeder in ihrer Form bei einer Verstellung relativ zum Fahrzeugaufbau nicht verändert, sondern lediglich die Lage der Kraftwirkungslinie relativ zur geometrischen Federmittellinie. Hierdurch erfordert die Verstellung der Schraubendruckfeder im Vergleich mit aus dem Stand der Technik bekannten Lösungen keinen wesentlichen zusätzlichen Bauraum.

Hierbei kann, je nach Anforderung und Einbausituation, vorgesehen sein, daß die Kraftwirkungslinie mit der geometrischen Federmittellinie einen Winkel einschließt, oder daß die Kraftwirkungslinie gegenüber der Federmittellinie parallel versetzt ist. Mit der hiermit vorgeschlagenen Möglichkeit wird der zu erreichende Effekt einer Verdrehung der Abstützung der Schraubendruckfeder gegenüber bekannten Radaufhängungen, bei denen übliche zentrische Schraubendruckfedern verwendet werden, die exzentrisch angeordnet sind, deutlich verstärkt, d.h. die bei entsprechenden Drehwinkeln zu erreichenden Effekte auf die Fahrzeugaufbaufedersteifigkeit sind stärker.

In praktischer Anwendung ist insbesondere vorgesehen, daß die Schraubendruckfeder sich an ihren Enden jeweils über Federteller gegenüber dem Fahrzeugaufbau bzw. dem Radträger oder der Lenkeranordnung abstützt, wobei weiterhin vorgesehen ist, daß zumindest einer der Federteller motorisch drehbar antreibbar ist. Hierbei sollte zumindest einer der motorisch angetriebenen Federteller drehbar gelagert sein. Sofern der jeweils zweite Teller feststehend ist und die Schraubendruckfeder mit ihrem entsprechenden Ende an diesem Federteller eingespannt ist, können zusätzliche Effekte der Federversteifung herbeigeführt werden, indem die Schraubendruckfeder bei der Verstellung zusätzlich tordiert wird. Üblicherweise sollte jedoch vorgesehen sein, daß beide Federteller drehbar gelagert sind, wobei einer von beiden motorisch drehbar angetrieben wird.

Sofern vorgesehen ist, daß beide Federteller motorisch drehbar angetrieben sind, kann bei einer entsprechenden Einspannung der Enden der Schraubendruckfeder an den Federtellern ebenfalls die Schraubendruckfeder zusätzlich tordiert werden und eine zusätzliche Veränderung der Federsteifigkeit der Feder selber zusätzlich zu der auf den Fahrzeugaufbau bezogenen Federsteifigkeit herbeigeführt werden.

Nach einer ergänzenden Ausführung kann vorgesehen sein, daß zumindest einer der Federteller um seine Längsachse kippbar verstellbar ist. Hiermit kann zusätzlich zur vorgegeben Abweichung von der Federmittellinie zur Kraftwirkungslinie noch eine Veränderung der Federmittellinie gegenüber der Geometrie der Radaufhängung herbeigeführt werden, wobei der durch die Verdrehung der Feder erzeugte Effekt bezogen auf die Kraftwirkungslinie um eben diese Verstellung verstärkt wird.

Nach einer weiteren ergänzenden Ausführung kann vorgesehen werden, daß zumindest einer der Federteller senkrecht zu seiner Mittelachse translatorisch verschiebbar angetrieben ist, wie es aus dem eingangs genannten Stand der Technik als solches bekannt ist. Diese Verstellung verändert ebenfalls die Geometrie der Radaufhängung insgesamt und kommt als ergänzender Effekt zur Veränderung der Aufbaufedersteifigkeit durch Verdrehung der Feder hinzu.

Nach einer weiteren ergänzenden Ausführungsform kann vorgesehen sein, daß die Schraubendruckfeder auf zumindest einem drehbar angetriebenen Federteller exzentrisch zu dessen Achse abgestützt ist, wie es ebenfalls als solches bereits aus dem Stand der Technik bekannt ist. Auch hierbei kommt die Veränderung der Federlage gegenüber der Radaufhängung als zusätzliche Verstellmöglichkeit zu den durch die einfache Verdrehung der Feder erzielbaren Effekte hinzu. Hierbei ist die Anordnung der Schraubendruckfeder so zu wählen, daß der Versatz von Kraftwirkungslinie zur Federmittellinie und der Versatz der Federmittellinie zur Drehachse des Federtellers sich aufaddieren, um die Wirkung der Verdrehung des Federtellers zu erhöhen.

Die verwendeten Schraubendruckfedern können im entspannten Zustand einen etwa S-förmigen Verlauf der Federmittellinie haben, wie in DE 37 43 450 C1 beschrieben, oder sie können einen im entspannten Zustand in einer ersten Ansicht etwa S-förmigen und in einer zweiten Ansicht etwa C-förmigen Verlauf der Federmittellinie haben gemäß DE 101 25 503 C1 bzw. im entspannten Zustand ein in einer ersten Ansicht etwa S-förmigen Verlauf und in einer zweiten dazu senkrechten Ansicht ebenfalls einen etwa S-förmigen Verlauf der Federmittellinie gemäß DE 101 25 503 C1.

Die Verstellung der Winkelposition der Schraubendruckfeder gegenüber dem Fahrzeugaufbau wird vorzugsweise durch eine elektronische Regeleinheit derart gesteuert werden, daß zum einen die Anpassung der Federsteifigkeit stationär in Abhängigkeit von der jeweils statischen Fahrzeuglast, beispielsweise im Belastungszustand zur Einhaltung eines wählbaren Aufbauniveaus eingestellt wird, und daß zum anderen die effektive Aufbaufedersteifigkeit dynamisch aus einer stationären Grundeinstellung heraus derart verändert wird, daß sie für eine möglichst gleichbleibende Aufbauposition bezüglich Straßenabstand und Aufbauneigung bei allen denkbaren Fahrzuständen verändert und angepaßt wird.

Mit den angezeigten Mitteln läßt sich ein vollaktives Fahrwerk mit Hilfe einer klassischen Stahlfederung darstellen, wobei nur elektronische Sensor- und Steuerungsmittel sowie elektromotorische Antriebsmittel erforderlich sind. Der zusätzliche Energieverbrauch kann hierbei gering gehalten werden. Aufgrund der in der Regel bereits vorhandenen Vielzahl von Sensoren für den Fahrzustand eines Kraftfahrzeuges, sind ebenfalls die zusätzlichen Kosten für die Steuerung und den motorischen Antrieb der Schraubendruckfedern gering. Kosten und Zusatzgewicht für ein vollaktives Fahrwerk können hierbei in Grenzen gehalten werden.

Aufgrund des genannten geringen Bauraumbedarfs ist es möglich, ein entsprechendes vollaktives Fahrwerk in nahezu jedem bestehenden Fahrzeug zu applizieren, ohne die bestehende Achskonstruktion wesentlich zu verändern. Denkbar ist sogar die Möglichkeit, die Radaufhängung gemäß der vorliegenden Erfindung als Nachrüstsatz bei verringertem Funktionsumfang in vorhandene Fahrzeuge einzubauen und so beispielsweise zumindest eine Möglichkeit zur Niveauregulierung zu erzielen. Der generell mit der vorliegenden Erfindung darstellbare Funktionsumfang steht dem anderer auf dem am Markt befindlicher vollaktiver Fahrwerke nicht nach.

Während die Verwendung elektromotorischer Antriebsmotoren nahezuliegen scheint, ist natürlich statt dessen der Einsatz pneumatischer oder hydraulischer Verstellmittel für die Schraubendruckfedern nicht ausgeschlossen.

Abhängig von der verwendeten Art der Sensoren und der eingesetzten Steuerungselektronik lassen sich die nachstehenden Wirkungen mit der steuerbaren Radaufhängung gemäß der Erfindung erzielen.

Der Aufbauwankwinkel bei Kurvenfahrt kann deutlich reduziert werden.

Der Anfahr- und Bremsnickwinkel kann im Bereich normaler Längsbeschleunigung vollständig ausgeglichen werden.

Die Hinterachseigenfrequenz kann unabhängig vom Beladungszustand konstant gehalten werden.

Es kann ein vollständiger Niveauausgleich bei Veränderung der Zuladung erzielt werden.

Die Grundauslegung der Schraubendruckfedern kann relativ weich erfolgen, da Niveauregelung und Aufbauwankwinkel durch gesteuertes Verhärten der Fahrzeugaufbausteifigkeit ausgeglichen werden können.

Durch weiche Grundauslegung der Schraubendruckfedern kann eine Verbesserung des Fahrkomforts und der Fahrsicherheit erzielt werden.

Durch aktiven Wankausgleich (unterschiedliche Verstellung der Schraubendruckfedern auf beiden Seiten des Fahrzeugs) kann der Stabilisator des Fahrzeugs weicher ausgelegt werden. Dies verbessert den Abrollkomfort und die Fahrsicherheit.

Durch getrennte Ansteuerung der Schraubendruckfedern der beiden Fahrzeugseiten wird eine Rückwirkung auf die gegenüberliegende Fahrzeugseite, wie durch einen bekannten Torsionsstabilisator, vermieden.

Ein Wegfall des bekannten Torsionsstabilisators ist möglich mit einer dadurch erzielten Verbesserung des Abrollkomforts.

Das Fahrzeugniveau (Bodenfreiheit) kann für Gelände- und Schlechtstreckenbetrieb erhöht werden.

Zur Reduzierung des Luftwiderstands oder zur Vereinfachung des Beladens kann eine extreme Niveauabsenkung (Reduzierung der Bodenfreiheit) eingestellt werden.

Das Eigenlenkverhalten des Fahrzeugs kann durch eine variable Wankmomentverteilung beeinflußt werden.

Durch geänderte Reaktionskräfte (Querkräfte) in den Gummilagern der Radaufhängung kann eine aktive Vorspurbeeinflussung erfolgen. Die Fahrstabilisierung kann hierbei verbessert werden.

Zum Zwecke des Fußgängerschutzes kann eine Veränderung des Fahrzeugniveaus (Bodenfreiheit) im Crashfall herbeigeführt werden.

Die erfindungsgemäße Radaufhängung, insbesondere ein vollaktives Fahrwerk mit Radaufhängungen der erfindungsgemäßen Art an allen Rädern eines Fahrzeugs, zeichnet sich durch einen geringen Bauteilumfang, ein einfaches Package und einen geringen Energieverbrauch gegenüber anderen aktiven Fahrwerken aus.

Bevorzugte Ausführungsbeispiele der Erfindung sind in den Zeichnungen dargestellt und werden nachstehend beschrieben.
- Figur 1: zeigt eine erfindungsgemäße Radaufhängung mit einem McPherson Federbein
a) in einer Ausgangsposition
b) in einer verdrehten Position.
- Figur 2: zeigt eine erfindungsgemäße Radaufhängung mit einem McPherson Federbein
a) in einer Ausgangsposition
b) in einer gedrehten und zusätzlich gekippten Federposition.
- Figur 3: zeigt eine erfindungsgemäße Radaufhängung mit einer doppelten Querlenkeranordnung
a) in einer Ausgangsposition
b) in einer verdrehten Federposition.
- Figur 4: zeigt eine erfindungsgemäße Radaufhängung mit einer Längslenkeranordnung
a) in einer Ausgangsposition
b) in einer verdrehten Federposition.
- Figur 5: zeigt eine erfindungsgemäße Radaufhängung mit einer Längslenkeranordnung
a) in einer Ausgangsposition
b) in einer verdrehten und translatorisch verschobenen Federposition.
- Figur 6: zeigt eine erfindungsgemäße Radaufhängung mit einer Längslenkeranordnung
a) in einer Ausgangsposition
b) in einer verdrehten Federposition der exzentrisch verdrehbaren Feder.
- Figur 7: zeigt eine McPherson-Federbeinanordnung nach den Figuren 1 und 2 mit motorischem Antrieb der Federteller
a) nämlich Antrieb des oberen Federtellers
b) nämlich Antrieb des unteren Federtellers
c) nämlich Antrieb beider Federteller.
- Figur 8: zeigt eine Querlenkerradaufhängung nach Figur 3 mit motorischem Antrieb der Federteller
a) nämlich Antrieb des oberen Federtellers
b) nämlich Antrieb des unteren Federtellers
c) nämlich Antrieb beider Federteller.
- Figur 9: zeigt eine Radaufhängung mit Längslenker- oder Schräglenkeranordnung nach den Figuren 4 und 5 mit motorischem Antrieb der Federteller
a) nämlich Antrieb des oberen Federtellers
b) nämlich Antrieb des unteren Federtellers
c) nämlich Antrieb beider Federteller.

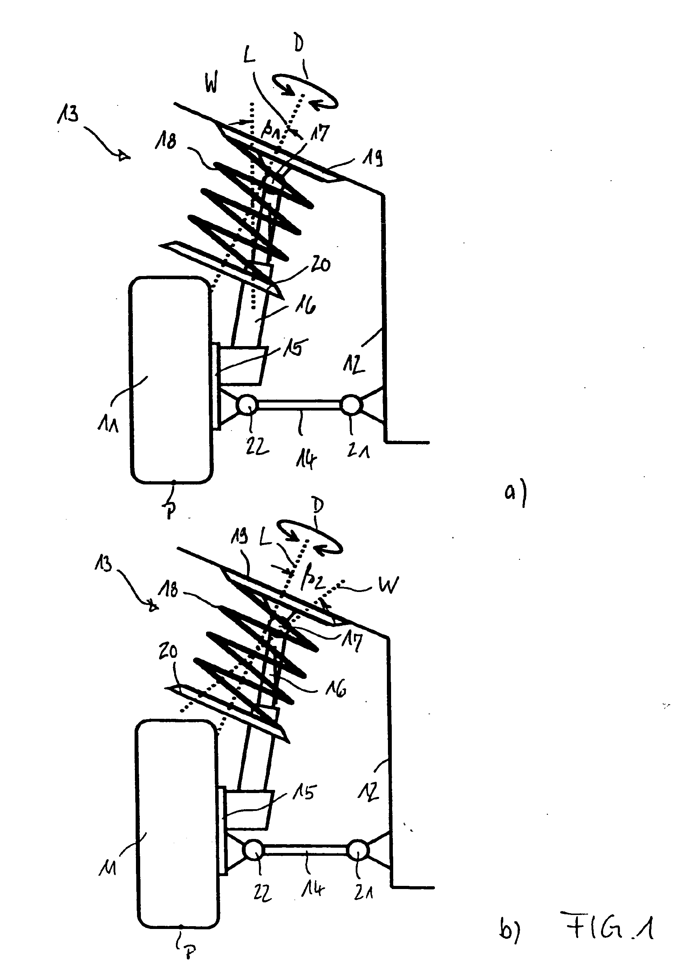

In Figur 1 werden die Darstellungen a) und b) zunächst gemeinsam beschrieben. Es ist eine Radaufhängung in systematischer Darstellung gezeigt, wobei eine Ansicht in Längsrichtung auf ein Rad 11 gezeigt ist. Es ist weiterhin ein Fahrzeugaufbau 12 erkennbar, mit dem das Rad 11 über eine McPherson-Federbeianordnung 13 und einen unteren Querlenker 14 verbunden ist. McPherson-Federbein 13 und Querlenker 14 greifen unmittelbar an einem Radträger 15 ein, der die Lagermittel für das Rad umfaßt und bei einem angetriebenen Rad zusätzlich ein Drehantriebsgelenk aufnehmen kann. Die McPherson-Federbeinanordnung 13 umfaßt einen Teleskopstoßdämpfer 16, der mit seinem oberen Ende über ein Gelenk 17, insbesondere ein Gummigelenk, am Fahrzeugaufbau 12 befestigt ist und mit seinem unteren Ende fest mit dem Radträger 15 fest verbunden ist. Der Stoßdämpfer 16 liegt innerhalb einer Schraubendruckfeder 18, die sich über einen oberen Federteller 19 am Fahrzeugaufbau 12 und über einen unteren Federteller 20 in nicht näher dargestellter Weise am Radträger 15 abstützt. Der Querlenker 15 ist über Gelenke 21, 22 mit dem Fahrzeugaufbau 12 und dem Radträger 15 verbunden. Die geometrische Mittellängsachse bzw. geometrische Federmittellinie L der Schraubendruckfeder 18 durchstößt die Federteller 19, 20 etwa mittig. Eine Wirkachse oder Kraftwirkungslinie W der Schraubendruckfeder 18 bildet aufgrund ihrer besonderen Herstellungsart bzw. ihrer besonderen Form im entspannten Zustand einen Winkel mit der Längsmittellinie L. Durch einen Drehpfeil D ist die Verdrehbarkeit der Schraubendruckfeder 18 gegenüber dem Fahrzeugaufbau 12 angedeutet. Während in Darstellung a) in einer Ausgangslage der Winkel β1 zwischen Mittellängsachse L und Kraftwirkungslinie W negativ angetragen ist, ist in Darstellung b) in einer Verstellage beispielsweise nach einer Drehung der Schraubendruckfeder um 180° um die Mittellängsachse der Winkel β2 zwischen Federmittellinie L und Kraftwirkungslinie entgegengesetzt positiv in etwa gleicher Größe eingezeichnet. Durch die Änderung dieses Winkels verändert sich die auf den Radaufstandspunkt P bezogene Federsteifigkeit der Abstützung des Fahrzeugaufbaus 12.

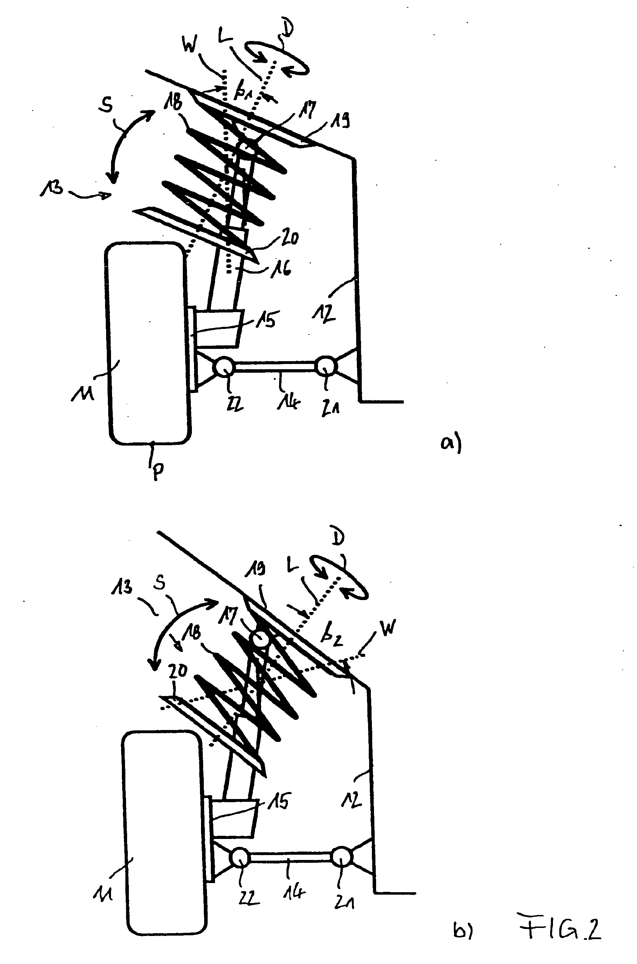

In Figur 2 werden die Darstellungen a) und b) zunächst gemeinsam beschrieben. Es ist eine Radaufhängung ähnlich der in Figur 1 gezeigten in systematischer Darstellung gezeigt, wobei eine Ansicht in Längsrichtung auf ein Rad 11 gezeigt ist. Gleiche Einzelheiten sind mit gleichen Bezugsziffern wie in Figur 1 belegt. Auf die Beschreibung wird insoweit Bezug genommen. Die geometrische Mittellängsachse bzw. geometrische Federmittellinie L durchstößt auch hier die Federteller 19, 20 etwa mittig. Eine Wirkachse oder Kraftwirkungslinie W der Schraubendruckfeder 18 bildet aufgrund ihrer besonderen Herstellungsart bzw. ihrer besonderen Form im entspannten Zustand einen Winkel mit der Längsmittellinie L. Durch einen Drehpfeil D ist die Verdrehbarkeit der Schraubendruckfeder 18 gegenüber dem Fahrzeugaufbau 12 angedeutet. Während in Darstellung a) der Winkel β1 zwischen Mittellängsachse L und Kraftwirkungslinie W negativ angetragen ist, ist in Darstellung b) beispielsweise nach einer Drehung der Schraubendruckfeder um 180° um die Längsmittelachse L der Winkel β2 zwischen Federmittellinie L und Kraftwirkungslinie W entgegengesetzt positiv in etwa gleicher Größe eingezeichnet. Wie durch einen zusätzlichen Schwenkpfeil S angezeigt, ist die Federmittellinie L durch Verschwenken der Federteller 19, 20 von ihrer in Darstellung a) gezeigten Ausgangslage in eine in Darstellung b) gezeigte Verstellage schwenkbar. Um das Maß der Verschwenkung erhöht sich noch die Veränderung der Lage der Kraftwirkungslinie W aus ihrer Ausgangslage gemäß Darstellung a) in ihre Verstellage gemäß Darstellung b). Durch die Änderung der Lage der Kraftwirkungslinie W verändert sich die auf den Radaufstandspunkt D bezogene Federsteifigkeit des Fahrzeugaufbaus 12. Die Federsteifigkeit der Abstützung des Fahrzeugaufbaus gegenüber dem Aufstandspunkt P des Rades wird mit diesen Mitteln in noch größerem Ausmaß verändert.

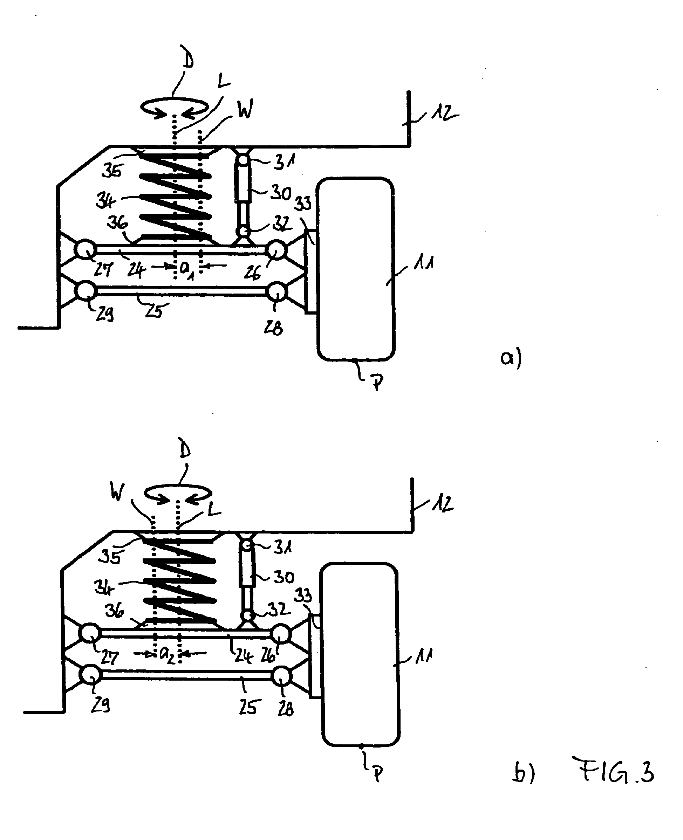

In Figur 3 werden die beiden Darstellungen zunächst gemeinsam beschrieben. Es ist eine Radaufhängung in Längsansicht auf ein Rad 11 dargestellt, das mit einem Fahrzeugaufbau 12 über zwei Querlenker 24, 25 verbunden ist. Die Querlenker lenken jeweils unmittelbar an einem Radträger 33 über Gelenke 26, 28 und am Fahrzeugaufbau 12 über Gelenke 27, 29 an. Zwischen dem oberen Querlenker 24 und dem Fahrzeugaufbau 12 befindet sich ein Stoßdämpfer 30, der mit dem Fahrzeugaufbau über einen Gelenkpunkt 31 und mit dem Querlenker 24 über einen Gelenkpunkt 32 verbunden ist. Weiterhin ist eine Schraubendruckfeder 34 vorgesehen, die sich über einen Federteller 35 am Fahrzeugaufbau 12 und über einen Federteller 36 am oberen Querlenker 24 abstützt. Die Federmittellinie L ist ebenso eingezeichnet wie die bauartbedingt parallel hierzu verschobene Kraftwirkungslinie W der Schraubendruckfeder 34. Während in Darstellung a) eine Ausgangsposition dargestellt ist, bei der die Kraftwirkungslinie in Bezug auf die Federmittellinie L zum Rad 11 hin um einen Abstand a1 verschoben ist, ist in Darstellung b) gezeigt, daß, beispielsweise durch Drehung der Schraubendruckfeder 34 um 180°, gemäß einem Drehpfeil D die Kraftwirkungslinie W um einen Abstand a2 in Richtung zum Fahrzeugaufbau bzw. zu den Anlenkpunkten der Querlenker am Fahrzeugaufbau verschoben ist. Aufgrund der gros-sen Hebelarme ist in Darstellung a) eine geringe Federsteifigkeit der Fahrzeugaufbauabstützung gegenüber dem Rad 11 gegeben, während in Darstellung b) aufgrund der kurzen wirksamen Hebelarme eine hohe Federsteifigkeit der Fahrzeugaufbauabstützung gegenüber dem Rad gegeben ist.

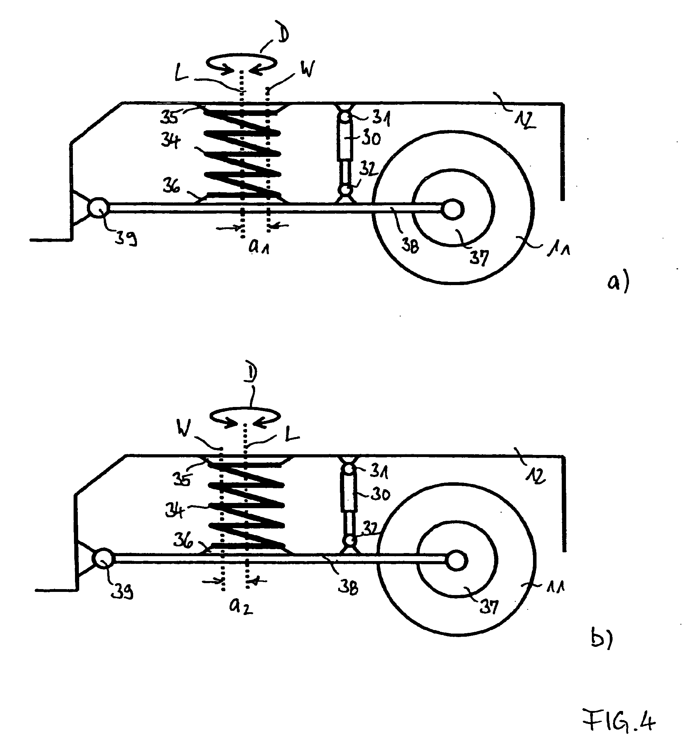

In Figur 4 werden die beiden Darstellungen zunächst gemeinsam beschrieben. Es ist eine Radaufhängung in Seitenansicht auf ein Rad 11 dargestellt, das mit einem Fahrzeugaufbau 12 über einen Längslenker 38 verbunden ist. Der Längslenker 38 ist starr mit einem Radträger 37 verbunden und greift am Fahrzeugaufbau über eine Schwenkachse 39 an. Zwischen dem Längslenker 38 und dem Fahrzeugaufbau 12 befindet sich ein Stoßdämpfer 30, der mit dem Fahrzeugaufbau über einen Gelenkpunkt 31 und mit dem Längslenker über einen Gelenkpunkt 32 verbunden ist. Weiterhin ist eine Schraubendruckfeder 34 vorgesehen, die sich über einen Federteller 35 am Fahrzeugaufbau und über einen Federteller 36 am Längslenker 38 abstützt. Die Federmittellinie L ist ebenso eingezeichnet wie die bauartbedingt parallel hierzu verschobene Kraftwirkungslinie W der Schraubendruckfeder 34. Während in Darstellung a) eine Ausgangsposition dargestellt ist, bei der die Kraftwirkungslinie in Bezug auf die Federmittellinie zum Rad 11 hin um einen Abstand a1 verschoben ist, ist in Darstellung b) gezeigt, daß, beispielsweise durch Drehung der Schraubendruckfeder um 180°, gemäß einem Drehpfeil D die Kraftwirkungslinie W um einen Abstand a2 in Richtung zum Anlenkpunkt des Längslenkers am Fahrzeugaufbau verschoben ist. Aufgrund der großen Hebelarme ist in Darstellung a) eine geringe Federsteifigkeit der Fahrzeugaufbauabstützung gegenüber dem Rad gegeben, während in Darstellung b) aufgrund der kurzen wirksamen Hebelarme eine harte Federsteifigkeit der Fahrzeugaufbauabstützung gegenüber dem Rad 11 gegeben ist.

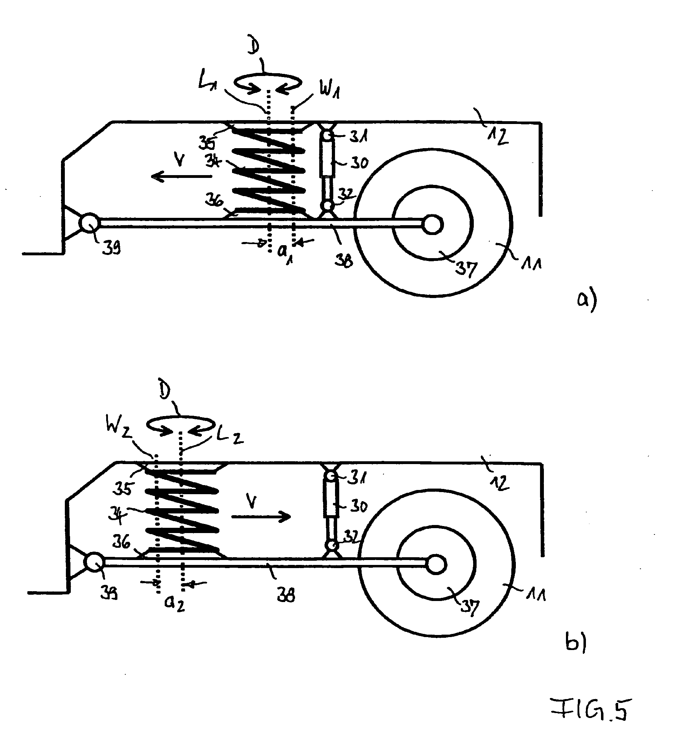

In Figur 5 werden die beiden Darstellungen zunächst gemeinsam beschrieben. Es ist eine Radaufhängung ähnlich der in Figur 4 in Seitenansicht auf ein Rad 11 dargestellt. Gleiche Einzelheiten sind mit gleichen Bezugsziffern wie in Figur 4 belegt. Auf die vorausgehende Beschreibung wird insoweit Bezug genommen. Die Federmittellinie L ist ebenso eingezeichnet wie die bauartbedingt parallel hierzu verschobene Kraftwirkungslinie W der Schraubendruckfeder 34. Während in Darstellung a) eine Ausgangsposition dargestellt ist, bei der die Kraftwirkungslinie W1 in Bezug auf die Mittellinie zum Rad 11 hin um einen Abstand a1 verschoben ist, ist in Darstellung b) gezeigt, daß, beispielsweise durch Drehung der Schraubendruckfeder um 180°, die Kraftwirkungslinie W2 um einen Abstand a2 in Richtung zum Anlenkpunkt des Längslenkers am Fahrzeugaufbau verschoben ist. Durch einen Verschiebepfeil V ist angedeutet, daß die Schraubendruckfeder 34 zusätzlich zu ihrer vorbeschriebenen Verdrehmöglichkeit eine translatorische Verschiebemöglichkeit aufweist, mit der die Federmittellinie L senkrecht zu ihrer Erstreckung im wesentlichen in Längsrichtung des Längslenkers 38 verschiebbar ist. Die durch die Verdrehung der Feder erzeugte Wirkung kann hierdurch noch gesteigert werden, da der Unterschied zwischen der Ausgangsposition der Kraftwirkungslinie W1 der Feder gegenüber der Verstellposition der Kraftwirkungslinie W2 durch diese translatorische Verschiebung nochmals vergrößert wird. Aufgrund der großen Hebelarme ist in Darstellung a) eine geringe Federsteifigkeit in der Fahrzeugaufbauabstützung gegenüber dem Rad gegeben, während in Darstellung b) aufgrund der kurzen wirksamen Hebelarme eine harte Federsteifigkeit der Fahrzeugaufbauabstützung gegenüber dem Rad gegeben ist.

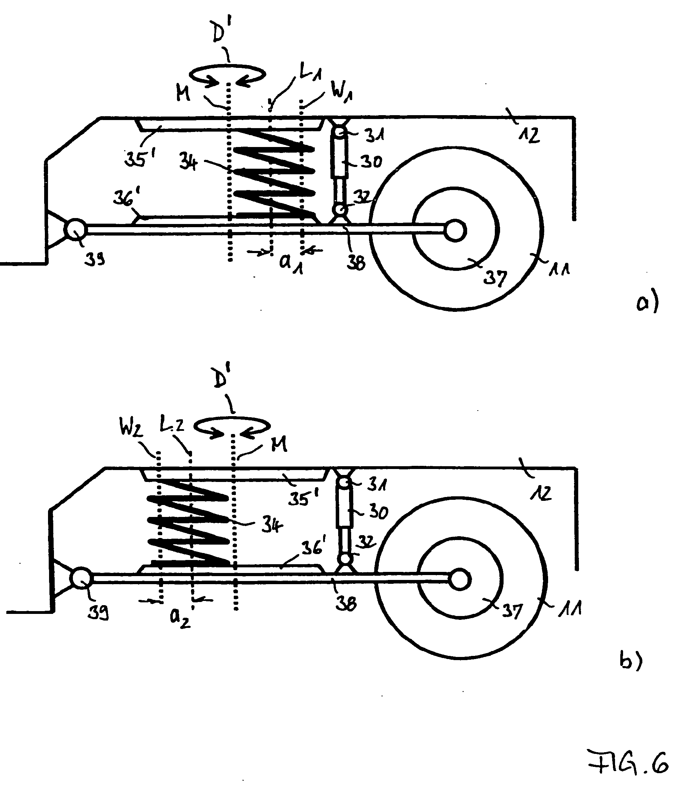

In Figur 6 werden die beiden Darstellungen zunächst gemeinsam beschrieben. Es ist eine Radaufhängung ähnlich der in Figur 4 dargestellten in Seitenansicht auf ein Rad 11 dargestellt. Gleiche Einzelheiten sind mit gleichen Bezugsziffern wie in Figur 4 belegt. Auf die entsprechende Beschreibung wird hiermit Bezug genommen. Die Federmittellinie L ist ebenso eingezeichnet wie die bauartbedingt parallel hierzu verschobene Kraftwirkungslinie W der Schraubendruckfeder 34. Während in Darstellung a) eine Ausgangsposition dargestellt ist, bei der die Kraftwirkungslinie W1 in Bezug auf die Mittellinie zum Rad 11 um einen Abstand a1 hin verschoben ist, ist in Darstellung b) gezeigt, daß, beispielsweise durch Drehung der Schraubendruckfeder um 180°, die Kraftwirkungslinie W2 um einen Abstand a2 in Richtung zum Anlenkpunkt des Längslenkers am Fahrzeugaufbau verschoben ist. In dieser Darstellung ist erkennbar, daß die Schraubendruckfeder 34 gegenüber den Federtellern 35', 36' exzentrisch angeordnet ist. Die Verdrehung gemäß dem Drehpfeil D bezieht sich hierbei unmittelbar auf die Mittelachse M der Federteller, wobei durch Verdrehung der Federteller unmittelbar die Längsmittellinie L der Schraubendruckfeder verstellt wird, wobei durch die versetzte Anordnung der Kraftwirkungslinie W gegenüber der Federmittellinie L der Effekt der Verschiebung gegenüber dem Längslenker nochmals erhöht wird, da mit den Federtellern auch die Schraubendruckfeder selber verdreht wird. Aufgrund der großen Hebelarme ist in Darstellung a) eine geringe Federsteifigkeit in der Fahrzeugaufbauabstützung gegenüber dem Rad gegeben, während in Darstellung b) aufgrund der kurzen wirksamen Hebelarme eine harte Federsteifigkeit der Fahrzeugaufbauabstützung gegenüber dem Rad gegeben ist.

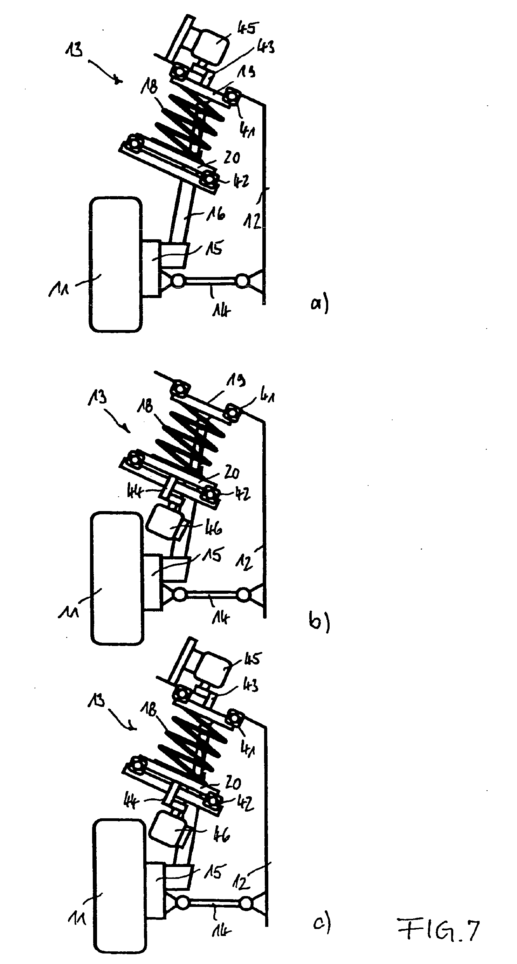

In Figur 7 sind gleiche Einzelheiten mit gleichen Bezugsziffern wie in den Figuren 1 bis 2 beschrieben. Auf die dortige Beschreibung wird insoweit Bezug genommen. In allen Darstellungen a) bis c) sind hierbei Axiallagermittel 41, 42 für die Federteller 19, 20 vorgesehen. In Darstellung a) greift an einer Drehantriebsachse 43 des Federtellers 19 ein Stellmotor 45 an. In Darstellung b) greift an einer Drehantriebsachse 44 des Federtellers 20 ein Stellmotor 46 an und in Darstellung c) greift sowohl an der Drehantriebsachse 43 des Federtellers 19 ein Stellmotor 45 als auch an der Drehantriebsachse 44 des Federtellers 20 ein Stellmotor 46 an.

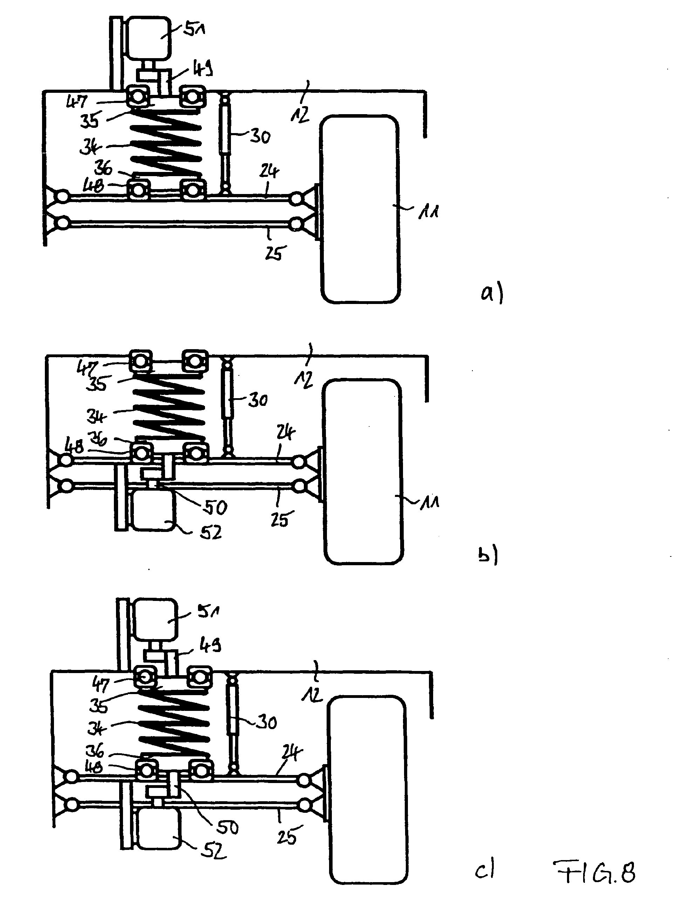

In Figur 8 sind gleiche Einzelheiten wie in Figur 3 mit gleichen Bezugsziffern versehen. Auf die Beschreibung wird insoweit Bezug genommen. Die Federteller 35, 36 sind hierbei in allen Darstellungen mit Axiallagern 47, 48 gegenüber dem Fahrzeugaufbau bzw. dem oberen Querlenker drehbar abgestützt. In Darstellung a) greift an einem Drehantriebszapfen 49 des oberen Federtellers 35 ein Stellmotor 51 an. In Darstellung b) greift an einem Drehantriebszapfen 50 des unteren Federtellers 36 ein Stellmotor 52 an und in Darstellung c) greifen sowohl an den Drehantriebszapfen des oberen als auch des unteren Federtellers 35, 36 Stellmotoren 51, 52 an.

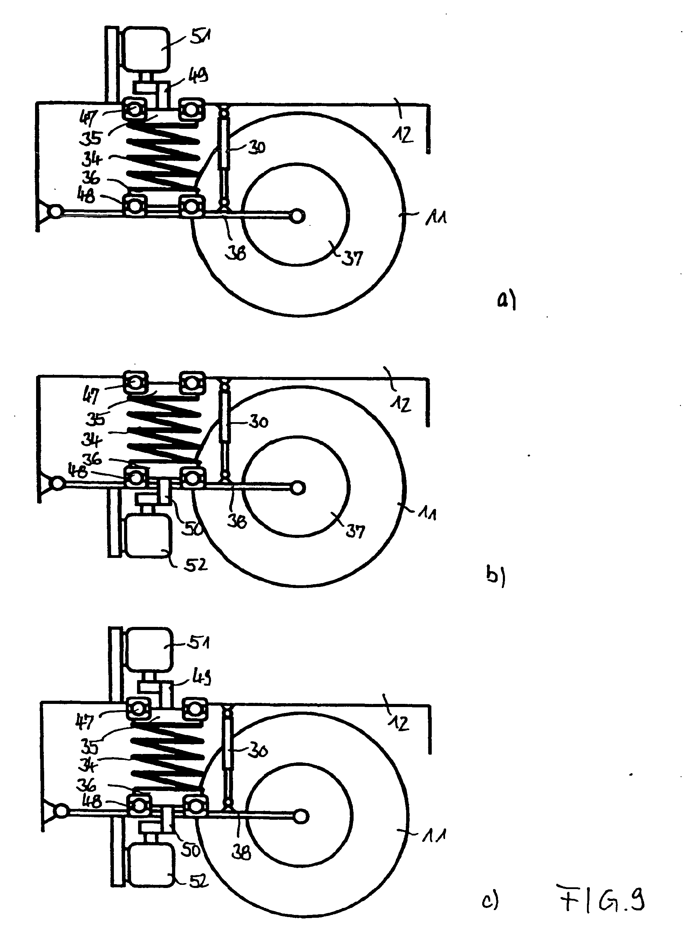

In Figur 9 sind gleiche Einzelheiten wie in Figur 4 mit gleichen Bezugsziffern versehen. Auf die Beschreibung wird insoweit Bezug genommen. Die Federteller 35, 36 sind hierbei in allen Darstellungen mit Axiallagern 47, 48 gegenüber dem Fahrzeugaufbau bzw. dem Längslenker drehbar abgestützt. In Darstellung a) greift an einem Drehantriebszapfen des oberen Federtellers 35 ein Stellmotor 51 an. In Darstellung b) greift an einem Drehantriebszapfen des unteren Federtellers 36 ein Stellmotor 52 an und in Darstellung c) greifen sowohl an den Drehantriebszapfen des oberen als auch des unteren Federtellers 35, 36 Stellmotoren 51, 52 an.

### Bezugszeichenliste

- 11: Rad
- 12: Fahrzeugaufbau
- 13: McPherson Federbein
- 14: Querlenker (unterer)
- 15: Radträger
- 16: Stoßdämpfer
- 17: Gelenkpunkt
- 18: Schraubendruckfeder
- 19: Federteller
- 20: Federteller
- 21: Gelenk
- 22: Gelenk
- 23:
- 24: Querlenker
- 25: Querlenker
- 26: Gelenk
- 27: Gelenk
- 28: Gelenk
- 29: Gelenk
- 30: Stoßdämpfer
- 31: Gelenk
- 32: Gelenk
- 33: Radträger
- 34: Schraubendruckfeder
- 35: Federteller
- 36: Federteller
- 37: Radträger
- 38: Längslenker
- 39: Schwenkachse

- 41: Axiallager
- 42: Axiallager
- 43: Drehantriebsachse
- 44: Drehantriebsachse
- 45: Stellmotor
- 46: Stellmotor
- 47:
- 48:
- 49: Drehantriebszapfen
- 50: Drehantriebszapfen
- 51: Stellmotor
- 52: Stellmotor

## Patentansprüche

1. Radaufhängung umfassend
einen Fahrzeugaufbau (12), ein an diesem über eine Lenkeranordnung beweglich angelenktes Rad (11) mit einem Radträger (15, 33) und zumindest einer Schraubendruckfeder (18, 34), die sich am Fahrzeugaufbau (12) einerseits und am Radträger (15, 33) oder der Lenkeranordnung andererseits abstützt, wobei die auf den Aufstandspunkt P des Rades (11) bezogene Federsteifigkeit der Fahrzeugaufbauabstützung gesteuert veränderbar ist, wobei eine Schraubendruckfederanordnung verwendet wird, deren Kraftwirkungslinie (W) von der geometrischen Federmittellinie (L) abweicht, und daß Verdrehmittel für die räumliche Verstellung der Kraftwirkungslinie (W) gegenüber der geometrischen Federmittellinie (L) vorgesehen sind,
**dadurch gekennzeichnet,**
**daß** die Schraubendruckfeder (18, 34) um ihre geometrische Längsmittellinie (L) verdrehbar ist.

2. Radaufhängung nach Anspruch 1,
**dadurch gekennzeichnet,**
**daß** die Kraftwirkungslinie (W) mit der geometrischen Federmittellinie (L) einen Winkel einschließt.

3. Radaufhängung nach Anspruch 1,
**dadurch gekennzeichnet,**
**daß** die Kraftwirkungslinie (W) gegenüber der Federmittellinie (L) parallel versetzt ist.

4. Radaufhängung nach einem der Ansprüche 1 bis 3,
**dadurch gekennzeichnet,**
**daß** die Schraubendruckfeder (18, 34) sich an ihren Enden jeweils über Federteller (19, 20, 35, 36) gegenüber dem Fahrzeugaufbau (12) bzw. dem Radträger (15, 33) oder der Lenkeranordnung abstützt.

5. Radaufhängung nach einem der Ansprüche 1 bis 4,
**dadurch gekennzeichnet,**
**daß** zumindest einer der Federteller (19, 20, 35, 36) motorisch drehbar antreibbar ist.

6. Radaufhängung nach Anspruch 5,
**dadurch gekennzeichnet,**
**daß** zumindest einer der motorisch antreibbaren Federteller (19, 20, 35, 36) drehbar gelagert ist.

7. Radaufhängung nach einem der Ansprüche 1 bis 6,
**dadurch gekennzeichnet,**
**daß** die Schraubendruckfeder (18, 34) auf dem zumindest einen drehbar angetriebenen Federteller (19, 20, 35, 36) exzentrisch zu dessen Mittelachse (M) abgestützt ist.

8. Radaufhängung nach einem der Ansprüche 1 bis 7,
**dadurch gekennzeichnet,**
**daß** zumindest einer der Federteller (19, 20, 35, 36) um seine Mittelachse (M) kippbar antreibbar ist.

9. Radaufhängung nach einem der Ansprüche 1 bis 8,
**dadurch gekennzeichnet,**
**daß** zumindest einer der Federteller (19, 20, 35, 36) etwa senkrecht zu seiner Mittelachse translatorisch verschiebbar antreibbar ist.

10. Radaufhängung nach einem der Ansprüche 1 bis 9,
**dadurch gekennzeichnet,**
**daß** die Schraubendruckfeder (18, 34) einen im entspannten Zustand etwa S-förmigen Verlauf der Federmittellinie hat, z.B. gemäß DE 37 43 450 C1.

11. Radaufhängung nach einem der Ansprüche 1 bis 9,
**dadurch gekennzeichnet,**
**daß** die Schraubendruckfeder (18, 34) einen im entspannten Zustand in einer ersten Ansicht etwa S-förmigen und in einer zweiten dazu senkrechten Ansicht etwa C-förmigen Verlauf der Federmittellinie hat, z.B. gemäß

12. Radaufhängung nach einem der Ansprüche 1 bis 9,
**dadurch gekennzeichnet,**
**daß** die Schraubendruckfeder (18, 34) einen im entspannten Zustand in einer ersten Ansicht etwa S-förmigen Verlauf und in einer zweiten dazu senkrechten Ansicht ebenfalls etwa S-förmigen Verlauf der Federmittellinie hat, z.B. gemäß DE 101 25 503 C1.

13. Radaufhängung nach einem der Ansprüche 1 bis 12,
**dadurch gekennzeichnet,**
**daß** die Radaufhängung eine McPherson-Radaufhängung ist, die eine ineinanderliegende Schraubendruckfeder-/Stoßdämpferanordnung (18, 16) und einen unteren Querlenker (14) umfaßt, wobei der Stoßdämpfer (16) am oberen Ende gelenkig am Fahrzeugaufbau (12) angelenkt ist und am unteren Ende fest mit dem Radträger (15) verbunden ist, und daß der Querlenker (14) insbesondere ein Dreiecksquerlenker ist, der um eine Achse (21) gegenüber dem Fahrzeugaufbau (12) schwenkbar und mit dem Radträger (15) um eine etwa dazu parallele Achse (22) schwenkbar verbunden ist, wobei sich die Schraubendruckfeder (18) am Fahrzeugaufbau (12) und am Radträger (15) abstützt.

14. Radaufhängung nach einem der Ansprüche 1 bis 13,
**dadurch gekennzeichnet,**
**daß** die Radaufhängung eine Querlenkeranordnung ist, die zumindest einen, insbesondere zwei übereinanderliegende Querlenker (24, 25) umfaßt, die um Drehachsen mit dem Fahrzeugaufbau (12) einerseits und dem Radträger (33) andererseits verbunden sind, wobei sich die Schraubendruckfeder (34) am Fahrzeugaufbau (12) einerseits und an einem der Querlenker (24) andererseits abstützt.

15. Radaufhängung nach einem der Ansprüche 1 bis 14,
**dadurch gekennzeichnet,**
**daß** die Radaufhängung eine Längslenker-, Verbundlenker oder Schräglenkeranordnung ist, die zumindest einen Längslenker (38) umfaßt, der um eine Drehachse (39) mit dem Fahrzeugaufbau (12) einerseits und dem Radträger (37) andererseits verbunden sind, wobei sich die Schraubendruckfeder (34) am Fahrzeugaufbau (12) einerseits und an einem der Längslenker (38) andererseits abstützt.

## Claims

1. A wheel suspension comprising
a vehicle body (12), a wheel (11) which is movably attached thereto by a control arm assembly and comprises a wheel carrier (15, 33), and comprising at least one helical pressure spring (18, 34) which is supported on the vehicle body (12) on the one hand and on the wheel carrier (15, 33) or the control arm assembly on the other hand, wherein the spring stiffness of the vehicle body supporting means, which spring stiffness refers to the contact point P of the wheel (11), is variably controlled, wherein there is used a helical pressure spring assembly whose force application line (W) deviates from the geometric spring centre line (L) and that there are provided rotating means for the 3-dimensional adjustment of the force application line (W) relative to the geometric spring centre line (L),
**characterised in**
**that** the helical pressure spring (18, 34) is rotatable around its geometric longitudinal centre line (L).

2. A wheel suspension according to claim 1,
**characterised in**
**that** the force application line (W) encloses an angle together with the geometric spring centre line (L).

3. A wheel suspension according to claim 1,
**characterised in**
**that** the force application line (W) is offset in parallel relative to the spring centre line (L).

4. A wheel suspension according to any one of claims 1 to 3,
**characterised in**
**that** the helical pressure spring (18, 34) is supported at its ends via spring plates (19, 20, 35, 36) relative to the vehicle body (12) and, respectively, the wheel carrier (15, 33) or the control arm assembly.

5. A wheel suspension according to any one of claims 1 to 4,
**characterised in**
**that** at least one of the spring plates (19, 20, 35, 36) is rotatably drivable by a motor.

6. A wheel suspension according to claim 5,
**characterised in**
**that** at least one of the spring plates (19, 20, 3, 36) being drivable by a motor is supported so as to be rotatable.

7. A wheel suspension according to any one of claims 1 to 6,
**characterised in**
**that** the helical pressure spring (18, 34) is supported on the at least one rotatably driven spring plate (19, 20, 35, 36) eccentrically relative to the central axis (M) of same.

8. A wheel suspension according to any one of claims 1 to 7,
**characterised in**
**that** at least one of the spring plates (19, 20, 35, 36) is tiltably drivable around its central axis (M).

9. A wheel suspension according to any one of claims 1 to 8,
**characterised in**
**that** at least one of the spring plates (19, 20, 35, 36) is drivable so as to be translatorily displaceable perpendicularly to its central axis.

10. A wheel suspension according to any one of claims 1 to 9,
**characterised in**
**that** the spring centre line of the helical pressure spring (18, 34), when in a stress-relieved condition, extends in an approximately S-shaped way, for example according to DE 37 43 450 C1.

11. A wheel suspension according to any one of claims 1 to 9,
**characterised in**
**that** the spring centre line of the helical pressure spring (18, 34), when in a stress-relieved condition, extends in an approximately S-shaped way in a first view and in an approximately C-shaped way in a second view arranged perpendicularly relative to the first view, for example according to DE 101 25 503 C1.

12. A wheel suspension according to any one of claims 1 to 9,
**characterised in**
**that** the spring centre line of the helical pressure spring (18, 34), when in a stress-relieved condition, extends in an approximately S-shaped way in a first view and in an approximately S-shaped way in a second view arranged perpendicularly relative to the first view, for example according to DE 101 25 503 C1.

13. A wheel suspension according to any one of claims 1 to 12,
**characterised in**
**that** the wheel suspension is a Mcpherson wheel suspension which comprises a helical pressure spring assembly/shock absorber assembly (18, 16) arranged inside one another and a lower transverse control arm (14), wherein the shock absorber (16), at its upper end, is articulated at the vehicle body (12) and, at its lower end, is firmly connected to the wheel carrier (15) and that the transverse control arm (14), more particularly, is a triangular transverse control arm which is pivotable around an axis (21) relative to the vehicle body (12) and is pivotably connected to the wheel carrier (15) around an axis (22) which extends approximately parallel to said axis (21), wherein the helical pressure spring (18) is supported on the vehicle body (12) and at the wheel carrier (15).

14. A wheel suspension according to any one of claims 1 to 13,
**characterised in**
**that** the wheel suspension is a transverse control arm assembly which comprises at least one, more particularly two transverse control arms (24, 25) which are arranged one above the other which, via axes of rotation are connected to the vehicle body (12) on the one hand and to the wheel carrier (33) on the other hand, wherein the helical pressure spring (34) is supported on the vehicle body (12) on the one hand and on one of the transverse control arms (23) on the other hand.

15. A wheel suspension according to any one of claims 1 to 14,
**characterised in**
**that** the wheel suspension is a longitudinal control arm assembly, a compound control arm or a semi-trailing arm assembly which comprises at least one longitudinal control arm (38) which, via an axis of rotation (39) is connected to the vehicle body (12) on the one hand and to the wheel carrier (37) on the other hand, wherein the helical pressure spring (34) is supported on the vehicle body (12) on the one hand and on one of the longitudinal control arm (38) on the other hand.

## Revendications

1. Système de suspension de roue comprenant,
une coque ou structure de véhicule (12), une roue (11) qui y est articulée de manière mobile par l'intermédiaire d'un agencement de bras articulés, avec un porte-roue (15, 33) et au moins un ressort de compression hélicoïdal (18, 34), qui s'appuie d'une part sur la coque de véhicule (12) et d'autre part sur le porte-roue (15, 33) ou sur l'agencement de bras articulés, la raideur de ressort rapportée au point d'appui au sol P de la roue (11) de l'agencement de ressort de compression hélicoïdal pouvant être modifiée de manière commandée, l'agencement de ressort de compression hélicoïdal utilisé ayant une ligne d'action de force (W) s'écartant de la ligne centrale géométrique (L) du ressort, et des moyens de mise en rotation pour le déplacement spatial de la ligne d'action de force (W) par rapport à la ligne centrale géométrique (L) du ressort étant prévus,
**caractérisé en ce qu'**il est possible de faire tourner le ressort de compression hélicoïdal (18, 34) autour de sa ligne centrale longitudinale géométrique (L).

2. Système de suspension de roue selon la revendication 1,
**caractérisé en ce que** la ligne d'action de force (W) forme un angle avec la ligne centrale géométrique (L) du ressort.

3. Système de suspension de roue selon la revendication 1,
**caractérisé en ce que** la ligne d'action de force (W) est décalée parallèlement par rapport à la ligne centrale géométrique (L) du ressort.

4. Système de suspension de roue selon l'une des revendications 1 à 3,
**caractérisé en ce que** le ressort de compression hélicoïdal (18, 34) prend appui, au niveau de ses extrémités, respectivement par des coupelles de ressort (19, 20, 35, 36), par rapport à la coque de véhicule (12) et respectivement au support de roue (15, 33) ou à l'agencement de bras articulés.

5. Système de suspension de roue selon l'une des revendications 1 à 4,
**caractérisé en ce que** l'une au moins des coupelles de ressort (19, 20, 35, 36) peut être entraînée en rotation par moteur.

6. Système de suspension de roue selon la revendication 5,
**caractérisé en ce que** l'une au moins des coupelles de ressort (19, 20, 35, 36) pouvant être entraînées par moteur, est montée rotative.

7. Système de suspension de roue selon l'une des revendications 1 à 6,
**caractérisé en ce que** le ressort de compression hélicoïdal (18, 34) s'appuie sur ladite coupelle de ressort (19, 20, 35, 36) pouvant être entraînée en rotation, de manière excentrée par rapport à l'axe central (M) de celle-ci.

8. Système de suspension de roue selon l'une des revendications 1 à 7,
**caractérisé en ce que** l'une au moins des coupelles de ressort (19, 20, 35, 36) peut être entraînée de manière à basculer autour de son axe central (M).

9. Système de suspension de roue selon l'une des revendications 1 à 8,
**caractérisé en ce que** l'une au moins des coupelles de ressort (19, 20, 35, 36) peut être entraînée de manière déplaçable en translation, sensiblement de manière perpendiculaire à son axe central (M).

10. Système de suspension de roue selon l'une des revendications 1 à 9,
**caractérisé en ce que** le ressort de compression hélicoïdal (18, 34) présente dans l'état détendu, une ligne centrale de ressort d'un tracé sensiblement en forme de S, par exemple conformément au document DE 37 43 450 C1.

11. Système de suspension de roue selon l'une des revendications 1 à 9,
**caractérisé en ce que** le ressort de compression hélicoïdal (18, 34) présente dans l'état détendu, une ligne centrale de ressort d'un tracé sensiblement en forme de S dans une première vue, et sensiblement en forme de C dans une deuxième vue perpendiculaire à la première, par exemple conformément au document DE 101 25 503 C1.

12. Système de suspension de roue selon l'une des revendications 1 à 9,
**caractérisé en ce que** le ressort de compression hélicoïdal (18, 34) présente dans l'état détendu, une ligne centrale de ressort d'un tracé sensiblement en forme de S dans une première vue, et également sensiblement en forme de S dans une deuxième vue perpendiculaire à la première, par exemple conformément au document DE 101 25 503 C1.

13. Système de suspension de roue selon l'une des revendications 1 à 12,
**caractérisé en ce que** le système de suspension de roue est un système de suspension du type Mc Pherson, qui comprend un agencement de ressort de compression hélicoïdal et d'amortisseur (18, 16) placés l'un dans l'autre, ainsi qu'un bras articulé inférieur (14), l'amortisseur (16) étant relié de manière articulée, au niveau de son extrémité supérieure, à la coque de véhicule (12), et relié de manière fixe, au niveau de son extrémité inférieure, au porte-roue (15), et **en ce que** le bras articulé inférieur (14) est notamment un bras transversal triangulaire, qui est relié à la coque de véhicule (12) en pouvant pivoter par rapport à celle-ci autour d'un axe (21), et est relié au porte-roue (15) de manière pivotante autour d'un axe (22) sensiblement parallèle au précédent, le ressort de compression hélicoïdal (18) prenant appui sur la coque de véhicule (12) et sur le porte-roue (15).

14. Système de suspension de roue selon l'une des revendications 1 à 13,
**caractérisé en ce que** le système de suspension de roue est un agencement à bras articulés transversaux qui comprend au moins un bras articulé transversal, notamment deux bras articulés transversaux (24, 25) superposés, qui sont reliés par des axes de rotation à la coque de véhicule (12) d'une part et au porte-roue (33) d'autre part, le ressort de compression hélicoïdal (34) prenant appui sur la coque de véhicule (12) d'une part, et sur l'un des bras articulés transversaux (24) d'autre part.

15. Système de suspension de roue selon l'une des revendications 1 à 14,
**caractérisé en ce que** le système de suspension de roue est un agencement à bras articulés longitudinaux, à bras articulés combinés ou à bras articulés obliques, comprenant au moins un bras articulé longitudinal (38), qui est relié de manière articulée autour d'un axe de rotation (39) à la coque de véhicule (12) d'une part, et au porte-roue (37) d'autre part, le ressort de compression hélicoïdal (34) prenant appui d'une part sur la coque de véhicule (12) et d'autre part sur l'un des bras articulés longitudinaux (38).
